# EUROPEAN PATENT APPLICATION

(11) **EP 4 576 645 A1**
(43) Date of publication of application: **25.06.2025**
(21) Application number: 23218765.8
(22) Date of filing: 20.12.2023
(51) Int. Cl.: H04L 9/00, G06Q 10/02, H04L 9/40

(54) **SYSTEM FOR GENERATING AND LENDING EVENT-TICKETS**

(30) Priority: 18.12.2023 PT 2023119139
(71) Applicant: NOS Inovação, S.A., 4460-191 Senhora da Hora (PT)
(72) Inventor: PINTO SEQUEIRA DOS SANTOS GRAÇA, JORGE FILIPE, SENHORA DA HORA, PORTO (PT); NUNES FERREIRA, JOÃO MIGUEL, SENHORA DA HORA, PORTO (PT); COUTINHO DE SOUSA, JOANA, SENHORA DA HORA, PORTO (PT)
(74) Representative: do Nascimento Gomes, Rui

(57) **Abstract**

The present application relates to a system for generating and lending of event-tickets in a distributed ledger, and discloses an infrastructure and processing scheme involving different computational authorities (10, 20). A ticketing authority (10) deploys smart-contracts (11) in a blockchain (1), which are configured to generate NFT tickets and to assign them to owner entities. In addition, a promoter authority (20) deploys smart-contracts (21, 23, 24) in the blockchain (1), which are configured to create events and periods associated to each event, to which the event-tickets being provided by the ticketing authority (10) are to be associated and later transmitted to a borrower entity. Due to the execution and deployment of smart-contracts, the event and event-ticket generation process, as well as the access to the respective metadata, reside in an immutable form on the blockchain (1), thus enabling a secure, traceable and transparent solution for generating and lending event-tickets.

## Description

### FIELD OF THE APPLICATION

The present application relates generally to the field of digital access control, and more particularly to the use of blockchain infrastructure for generating and manipulating event tickets.

### PRIOR ART

Access to events in a physical or virtual environment, such as, for example, concerts or webinars, is associated with an access control based on the generation and subsequently validation of a respective entry pass or ticket.

For example, in the context of a concert, the access to the event may be guaranteed by acquiring a ticket that is generated by a ticketing authority and that must be validated at the event's entrance.

However, an event-ticket can be copied and forged and used by people who do not have a legitimate right to do so. Furthermore, in the context of digital tickets, these are normally hosted on servers or in a cloud infrastructure belonging to the ticketing authority, which requires that data associated with each ticket owner be processed in a way that guarantees its privacy and security. This requirement is reflected in complex and time-consuming data processing.

In addition, current digital ticketing infrastructures do not allow tracking of ticket holders, in the case of ticket resale or transmission. In this context, several solutions have emerged that use blockchain infrastructure to generate tickets in the form of digital assets. Particularly, non-fungible tokens (NFT) ticketing, in the context of event ticketing, has several advantages over conventional paper or digital ticketing, providing a secure, transparent and efficient way of issuing and managing tickets. In fact, NFTs are significantly harder to forge or duplicate than conventional tickets since they are stored on a blockchain, which enables transparency and traceability, making it possible to trace the ownership and origin of the ticket. This lowers the risk of fraud and fake tickets by allowing event organizers to determine that only authentic tickets are used to enter an event.

However, NFT ticketing is a relatively new concept that is not yet widely used in the ticketing industry mainly because there is still a lack of infrastructure to enable. In fact, the existing solutions are still very basic and do not allow for a complete and effective response to all the dynamics that an access control scenario imposes, especially in terms of generation and lending of NFT tickets to a third party.

The present solution intended to innovatively overcome such issues.

### SUMMARY OF THE APPLICATION

The present application relates to a system for generating and lending event-tickets in a distributed ledger. In particular, it is disclosed an infrastructure and processing scheme involving different computational authorities that are operatively connected to enable the generation and lending of event-tickets in a secure, traceable and transparent way.

According to the object of the present application, a ticketing authority is an authorized ticketing authority, able to comply with an event-ticket generation process and a promoter authority is an authorized promoter authority, able to comply with an event creation and management process, said processes being implemented using smart-contracts that are defined and are available on blockchains. More particularly, a ticketing authority is responsible for deploying smart-contracts in a blockchain infrastructure, which are configured to generate NFT tickets and to assign them to owner entities, according to a particular set of rules. In addition, a promoter authority is responsible for deploying smart-contracts in a blockchain infrastructure, which are configured to create events, according to a particular set of rules, to which the event-tickets being provided by the ticketing authority will be associated. In a practical scenario, a person who wishes to purchase a ticket for an event may access to a web service associated with a promoter authority to which the event relates, using its digital wallet, which contain an identifier representing a digital account to which the NFT ticket to be purchased is to be registered. Consequently, once the purchase action is completed, the NFT ticket is registered in the account associated with the owner's digital wallet, that is identified by an owner entity identifier. Said owner entity may, upon issuance of a lending request, transfer a NFT ticket that is assigned to its owner entity identifier digital account, to a borrower entity's digital wallet. In practical terms, this lending procedure implies that the NFT ticket subject to the lending procedure is also registered in a borrower entity identifier, representing the digital account associated to the borrower entity's digital wallet, attributing the latter the authorization to use said NFT ticket instead of the owner entity.

The solution described in the present application aims to solve the technical problem of ticketing authenticity in the context of a lending, where the event-ticket is to be used by a borrower entity that is not the owner entity to which the event-ticket is assigned.

Due to the execution and deployment of smart-contracts in a blockchain infrastructure, it is guaranteed that the rules involved in both the event creation process and the event-ticket generation process, as well as the access to the respective metadata, reside in an immutable form on the blockchain. Consequently, it is this decentralized approach that enables a secure, traceable and transparent solution for generating and manipulating NFT event-tickets.

### DESCRIPTION OF FIGURES

Figure 1 - block diagram representation of an embodiment of the event-ticket generation and lending infrastructure described in the present application, wherein the reference signs represent:
   - 1-: blockchain infrastructure;
   - 10 -: ticketing authority;
   - 11-: event-ticket smart-contract;
   - 20 -: promoter authority;
   - 21 -: event-promoter smart-contract;
   - 23 -: event smart-contract;
   - 24 -: agreements-event-period smart-contract.
Figure 2 - block diagram illustrating the generation of NFT tickets, wherein the reference signs represent:
   - 10 -: ticking authority;
   - 11-: event-ticket smart-contract;
   - 12 -: NFT ticket generator routine;
   - IDN -: NFT ticket identifier, assigned to an owner entity identified by an identifier.
Figure 3 - block diagram illustrating the creation of events and the association of NFT tickets to events, in a case of lending the NFT ticket to be validated to a borrower entity, wherein the reference signs represent:
   - 11-: event-ticket smart-contract;
   - 20 -: promotor authority;
   - 21 -: event-promoter smart-contract;
   - 22 -: storage means to store event data;
   - 23 -: event smart-contract;
   - 24 -: agreements-event-period smart-contract;
   - 25 -: lending agreement;
   - ID1, ID2 -: NFT ticket identifier, assigned to a borrower entity identified by an identifier.

### DETAILED DESCRIPTION

The more general and advantageous configurations of the present application are described in the Summary of the invention. Such configurations are detailed below in accordance with other advantageous and/or preferred embodiments of implementation.

It is disclosed a decentralized approach for generating and lending NFT tickets for events.

A NFT, non-fungible token, is formed by encoded data on a blockchain. The token includes a unique identifier, a smart-contract, and underlying content, e.g., an image, video or audio file. A NFT may be created using any standard library known for this purpose, such as ERC-721. In this context, a ticket to an event is part of the NFT's underlying content, and may be in the form of an image, for example. As for smart-contracts, they are self-executing agreements that live on blockchain-based platforms, and are a set of coded computed functions that trigger self-executing actions performed by computing nodes within a blockchain infrastructure. Therefore, in the context of the present application, smart-contracts are used to establish and record immutable contractual relationships between the intervening parties, as will be explained below.

In the context of the present application, an event may relate to an occurrence of any nature, such as social, cultural, artistic or sporting, that is organized by promoter authorities (20) with institutional, community or promotional objectives, among others. As an example, an event may concern a concert, a show, a contest, a ceremony, a seminar, a conference or a lecture. An event may take place in a particular physical or virtual space, at a specific day and time, and for a defined period of time, which may be expressed in minutes, hours or days. Thus, an event is characterized by an event time duration that defines the start and end day and time of the event, during which the event takes place. Additionally, an event time duration may be divided into periods, referred to as event-time periods. For example, considering a 3-day event, the event time duration is counted from the start date and time of the first day to the end date and time of the third day, and an event-time period may be defined as being a period of one day. Therefore, an event-ticket may be associated to an event, or to each event-time period. The access to an event is conditioned on participants who have acquired the respective access authorization. Also in the context of the present application, an event access authorization takes the form of a NFT ticket that is provided by a ticketing authority (10), may be transacted for lending purposes, and is validated by a validating authority upon entry to the event. In this particular context, the event time duration represents the period during which an event-ticket shall be validated, in order to prevent the event-ticket from being validated for a date that does not correspond to the event, or after the event has ended.

The decentralized approach that is presented runs on a distributed ledger comprising a blockchain infrastructure (1) that supports the execution of smart-contracts (11, 21, 23, 24) and as a decentralised database it, stores all the interactions between different authorities (10, 20), for the purposes of generating, monitoring, lending and validating event tickets, which by becoming immutable, transparent and traceable, allows to significantly reduce the risk of fraud, related to the forgery or duplication of an event-ticket or the validation of an event-ticket by an unauthorized ticket holder. In the context of such decentralization approach, each authority and each participant in the process of acquisition, transaction for the purpose of lending or validating a NFT ticket for an event, as well as the NFT ticket itself, and the smart-contracts whose execution and deployment on the blockchain guarantee the advantages already mentioned, have an associated identifier. This identifier may be a unique blockchain identification address, like a hexadecimal code. Additionally, as an exemplary embodiment, the blockchain infrastructure may be Ethereum.

Also in the context of the present application, the association between smart-contracts, authorities and participants expresses a technical implementation infrastructure that allows operational coupling between them for the purpose of generating, manipulating and validation NFT tickets.

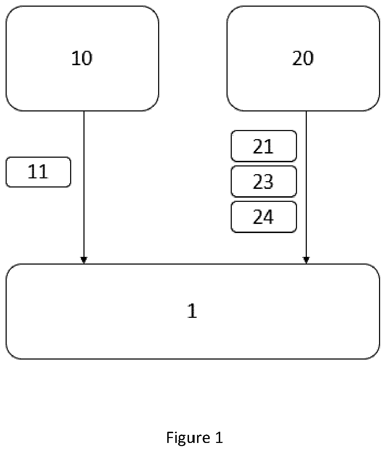

Figure 1 illustrate a block diagram of an embodiment of the event-ticket generation and lending infrastructure described in the present application.

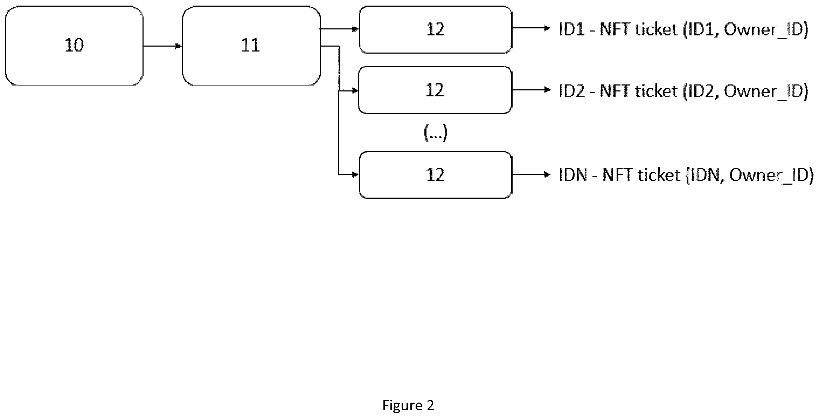

Figure 2 specifies the process of generating a NFT ticket. In particular, the ticketing authority (10) is responsible for deploying in the blockchain the event-ticket smart-contract (11), that assigns an owner entity, identified by an owner entity identifier or owner_ID, to a NFT ticket identified by a NFT ticket identifier (IDN). For this purpose, the event-ticket smart-contract (11) may execute a NFT ticket generator routine (12), such as a SafeMint function, having as input parameters at least the owner entity identifier.

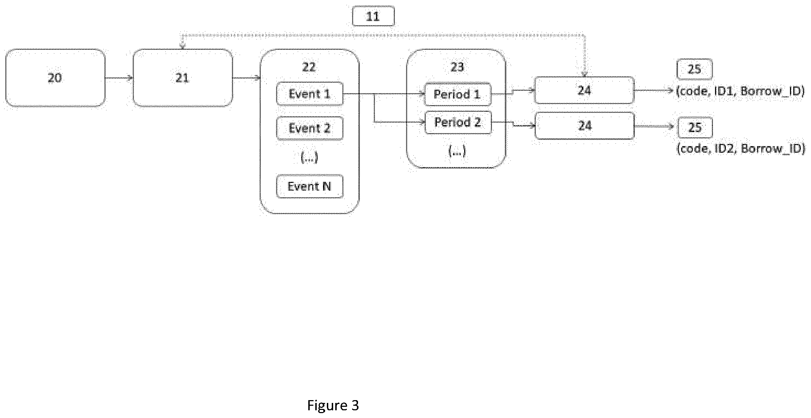

Figure 3 relates to the process of creating an event and associating a ticketing authority to each event. More particularly, a promoter authority (20) is deploying in the blockchain event-promoter smart-contracts (21) to assign a promoter authority identifier to each created event. The promoter authority, identified by the respective identifier, in which the deploy is registered may have event management privileges, namely creating and cancelling events, with all events associated with said promotor authority being registered in a data structure array (22). Associated to each event, there is an event-smart-contract (23). To create this smart-contract (23), it is necessary to provide the unique identifier of the event-ticket smart-contract (11), that is responsible for generating event-tickets (IDN), and the unique identifier of the promoter authority (20), as only that entity has the permission to manage the event, namely the days on which the event takes place, as well as the definition/authorization of allowing ticket lending agreements (25). This smart-contract (23) also creates event-time periods within an event time duration, and is programmed to store the days/periods in which the event occurs, as well as a mapping between the day/period and a respective agreements-event-period smart-contract (24), identified by an identifier, that is responsible for generating a lending agreement (25). In fact, an agreements-event-period smart-contract (24) is responsible for managing and storing all lending agreements (25), relating to periods of a certain promoter authority (20) event. For that purpose, it is necessary to provide the event-ticket smart-contract identifier, so that the agreements-event-period smart-contract (24) is able to verify the existence of the NFT identifier, as well as its owner. The main function of this smart-contract (24) is the creation and management of lending agreements (25) between the NFT ticket owner entity and a borrower entity. For this purpose, the smart-contract (24) is configured to execute a lending agreement control routine for creating and managing lending agreements (25), which allows the borrower entity to use the NFT ticket for a certain period, at a certain event, instead of the owner entity that had originally requested its generation. More particularly, since lending a NFT ticket involves the management of two digital accounts, that is, the owner entity identifier and the borrower entity identifier, the lending agreement control routine is configured to manage NFT ticket usage permissions based, for example, in the attribution of different levels of access permission to each entity according to a priority scheme defining that for an event-time period associated to a lending agreement (25), a borrower entity identifier is attributed a higher access priority then the owner entity identifier, thus authorizing the borrower entity to use the NFT ticket and not the owner entity.

It is the owner entity of the NFT ticket, who performs a lending request, to lend his ticket to the borrower entity. The smart-contract (24), upon receiving the NFT ticket identifier and the borrower entity identifier contained in the lending request, first starts by checking whether the entity issuing the lending request is actually the owner entity assigned to the NFT ticket. To do this, the smart-contract (24) performs a verification operation on the event-ticket smart-contract identifier that was responsible for the generation of the NFT ticket to be borrowed, checking whether the NFT ticket identifier exists, and who the current owner entity is. If the entity making the lending request is not the owner entity assigned to the NFT ticket, the lending operation is terminated and a lending agreement (25) is not generated. If the verification of the owner entity and the existence of the NFT ticket is positive, the agreements-event-period smart-contract (24) also checks whether there is already a pre-established agreement between the owner entity and a borrower entity for that same NFT ticket, to avoid duplication of lending agreements (25). If there is no such an agreement (25), the smart-contract (24) creates a unique control identifier, referring to the lending agreement (25) for the given period of the event. The smart-contract (24) stores the lending agreement (25) created in the blockchain (1) in addition to the unique identification code of the lending agreement (25), the NFT ticket identifier and the borrower entity identifier. The agreements-event-period smart-contract (24) may also store the number of lending agreements (25) made for each owner, and the respective lending agreement identification code, as each owner entity may have more than one NFT ticket for the same event. Thus, the smart-contract (24) may store not only the lending agreements (25) established, but also the lending agreements (25) by each NFT ticket owner.

### EMBODIMENTS

In a preferred embodiment of the system for generating and lending event-tickets, it is comprised by:
A ticketing authority (10) comprised of one or more processors configured to:
   - deploy an event-ticket smart-contract (11) in the digital ledger, which is assigned an identifier, thereby associating a respective ticketing authority identifier, identifying a ticketing authority (10), to said smart-contract identifier;
A promotor authority (20) comprised of one or more processors configured to:
   - deploy an event-promoter smart-contract (21), in the digital ledger, which is assigned an identifier, thereby associating a respective promoter authority identifier, identifying a promotor authority (20), to said smart-contract identifier;
   - deploy an event smart-contract (23) in the digital ledger, which is assigned an identifier, thereby associating an event to a promoter authority identifier and to an event-ticket smart-contract identifier;
   - deploy an agreements-event-period smart-contract (24) in the digital ledger, which is assigned an identifier, thereby associating an event-time period to an event smart-contract identifier, to assign a NFT ticket to be generated by an event-ticket smart-contract (11) to a borrower entity identifier, identifying a borrower entity, and to associate said NFT ticket to an event-time period to be created by an event smart-contract (23);
A smart-contract generator comprised of one or more processors configured to generate:
   - event-ticket smart-contracts (11), to be associated to at least one ticketing authority (10) and being configured to generate a NFT ticket, identified by a NFT ticket identifier (IDN), and to assign it to an owner entity identifier, that identifies an owner entity;
   - event-promoter smart-contracts (21), to be associated to at least one promoter authority (20) and being configured to create an event defined by an event time duration;
   - event smart-contracts (23), to be associated to each event and being configured to associate a promoter authority identifier to an event-ticket smart-contract identifier, and to create event-time periods within an event time duration;
   - agreements-event-period smart-contracts (24), to be associated to an event-time period and being configured to associate an event-ticket smart-contract identifier and the respective NFT ticket identifier (IDN) and owner entity identifier, to a borrower entity identifier; each agreements-event-period smart-contract (24) being further configured to generate a lending agreement (25), identified by a lending agreement code.

In one embodiment, an event-ticket smart contract (11) is configured to generate a NFT ticket to an event based on event data; said event data related to an event name and an event acronym. An event-ticket smart contract (11) may be further configured to execute a NFT ticket generator routine (12) operable to generate a NFT ticket and to attribute to said NFT ticket an identifier (IDN), and wherein the NFT ticket generator routine (12) is further operable to generate a NFT ticket by having as input parameters at least the owner entity identifier. Additionally, the NFT ticket generator routine (12) is operable to generate a NFT ticket by having as additional input parameter an URL address to a NFT ticket image. For generating NFT tickets the routine (12) may implement any standard library known for this purpose, such as ERC-721.

In another embodiment, an event-ticket smart contract (11) is further configured to execute an access control routine operable to attribute an access permission level to a NFT ticket to be generated. The access control routine being programmed to attribute an access permission level to a NFT ticket based on a permission model consisting of one or more permission sets. A permission model may be comprised of a plurality of hierarchical access permission levels, to restrict access to an exclusive event's site. Each access permission level may be associated to a permission set comprised of one or more rules applicable to the NFT ticket to allow or deny access to an exclusive event's site to which a particular access permission level is required.

In this context, the NFT ticket generator routine (12) may be further operable to generate a NFT ticket based on an attributed permission access level.

In another embodiment, the access control routine is further operable to store the for each NFT ticket identifier (IDN) the respective access permission level attributed.

In another embodiment, an event-promoter smart-contract (21) is configured to create an event, based on at least: an event name, an URL address to where images for NFT ticket generation are stored and an event-ticket smart-contract identifier. The event-promoter smart-contract (21) may be further configured to delete events associated to a promoter authority identifier. Additionally, a promotor authority (20) may further comprise storage means (22) configure to implement a data structure array arranged to store, for each event associated to the respective promoter authority identifier: an event name, an URL address to where images for NFT ticket generation are stored, an event-ticket smart-contract identifier and an event smart-contract identifier.

In another embodiment, an event smart-contract (23) is further configured to execute an event-period routine operable to create at least two event-time periods within an event-time duration, and wherein, the event-period routine is further operable to associate each event-time period with a respective agreements-event-period smart-contract identifier. More particularly, an agreements-event-period smart-contract (24) is configured to, upon reception of a lending request issued by an owner entity for an event-time period, said lending request comprising at least a NFT ticket identifier (IDN) and a borrower entity identifier, execute a control policy routine operable to:
- access the event-ticket smart-contract identifier associated to the event-time period object of the lending request, and retrieve information related to the NFT ticket identifier (IDN) and the owner entity identifier associated to said event-ticket smart-contract identifier;
- validate the lending request if the owner entity that issued the landing request is that same owner entity identified by the owner entity identifier, and if the NFT ticket identifier (IDN) contained in the lending request exists;
- instruct the agreements-event-period smart-contract (24) to execute a lending agreement control routine to generate a lending agreement (25).

The lending agreement control routine may be configured to manage NFT ticket usage permissions based, for example, in the attribution of different levels of access permission to each entity, according to a priority scheme. More particularly, said priority scheme may define that for an event-time period associated to a lending agreement (25), a borrower entity identifier is attributed a higher access priority then the owner entity identifier, thus authorizing the borrower entity to use the NFT ticket and not the owner entity.

In another embodiment, an agreements-event-period smart-contract (24) is further configured to execute a lending agreement manager routine operable to store lending agreements (25) generated by agreements-event-period smart-contracts (24) in the blockchain (1). The manager routine may be operable to associated to each lending agreement (25), the respective lending agreement identification code, the NFT ticket identifier (IDN) associated to the event-ticket smart-contract identifier and the borrower entity identifier. Additionally, the control policy routine is further operable to validate the lending request, if the NFT ticket identifier (IDN) contained in the lending request, is not associated with a lending agreement (25) already stored in the blockchain (1).

In another embodiment, the identifier assigned to:
a ticketing authority (10), a promotor authority (20), an owner entity, a borrower entity and to
an event-ticket smart-contract (11), an event-promoter smart-contract (21), an event smart-contract (23), and to an agreements-event-period smart-contract (24), is a unique blockchain identification address; optionally, said address is a hexadecimal code.

Finally, in one embodiment, the blockchain infrastructure (1) is Ethereum.

As will be clear to one skilled in the art, the present invention should not be limited to the embodiments described herein, and a number of changes are possible which remain within the scope of the present invention.

Of course, the preferred embodiments shown above are combinable, in the different possible forms, being herein avoided the repetition all such combinations.

## Claims

1. System for generating and lending event-tickets in a digital ledger, the digital ledger comprising a blockchain infrastructure (1) adapted to support the execution of smart-contracts; the system comprising:
A ticketing authority (10) comprised of one or more processors configured to:
- deploy an event-ticket smart-contract (11) in the digital ledger, which is assigned an identifier, thereby associating a respective ticketing authority identifier, identifying a ticketing authority (10), to said smart-contract identifier;
A promotor authority (20) comprised of one or more processors configured to:
- deploy an event-promoter smart-contract (21), in the digital ledger, which is assigned an identifier, thereby associating a respective promoter authority identifier, identifying a promotor authority (20), to said smart-contract identifier;
- deploy an event smart-contract (23) in the digital ledger, which is assigned an identifier, thereby associating an event to a promoter authority identifier and to an event-ticket smart-contract identifier;
- deploy an agreements-event-period smart-contract (24) in the digital ledger, which is assigned an identifier, thereby associating an event-time period to an event smart-contract identifier, to assign a NFT ticket to be generated by an event-ticket smart-contract (11) to a borrower entity identifier, identifying a borrower entity, and to associate said NFT ticket to an event-time period to be created by an event smart-contract (23);
A smart-contract generator comprised of one or more processors configured to generate:
- event-ticket smart-contracts (11), to be associated to at least one ticketing authority (10) and being configured to generate a NFT ticket, identified by a NFT ticket identifier (IDN), and to assign it to an owner entity identifier, that identifies an owner entity;
- event-promoter smart-contracts (21), to be associated to at least one promoter authority (20) and being configured to create an event defined by an event time duration;
- event smart-contracts (23), to be associated to each event and being configured to associate a promoter authority identifier to an event-ticket smart-contract identifier, and to create event-time periods within an event time duration;
- agreements-event-period smart-contracts (24), to be associated to an event-time period and being configured to associate an event-ticket smart-contract identifier and the respective NFT ticket identifier (IDN) and owner entity identifier, to a borrower entity identifier; each agreements-event-period smart-contract (24) being further configured to generate a lending agreement (25), identified by a lending agreement code.

2. The system according to claim 1, wherein an event-ticket smart contract (11) is configured to generate a NFT ticket to an event based on event data; said event data related to an event name and an event acronym.

3. The system according to claim 1 or 2, wherein an event-ticket smart contract (11) is configured to execute a NFT ticket generator routine (12) operable to generate a NFT ticket and to attribute to said NFTticket an identifier (IDN), and wherein,
the NFT ticket generator routine (12) is further operable to generate a NFT ticket by having as input parameters at least the owner entity identifier.

4. The system according to claim 3, wherein the NFT ticket generator routine (12) is operable to generate a NFT ticket by having as additional input parameter an URL address to a NFT ticket image.

5. The system according to any of the previous claims, wherein an event-ticket smart contract (11) is further configured to execute an access control routine operable to attribute an access permission level to a NFT ticket to be generated; the access control routine being programmed to attribute an access permission level to a NFT ticket based on a permission model consisting of one or more permission sets; and wherein,
a permission model is comprised of a plurality of hierarchical access permission levels, to restrict access to an exclusive event's site; and wherein
each access permission level being associated to a permission set comprised of one or more rules applicable to the NFT ticket to allow or deny access to an exclusive event's site to which a particular access permission level is required.

6. The system according to claims 3 and 5, wherein the NFT ticket generator routine (12) is operable to generate a NFT ticket based on an attributed permission access level.

7. The system according to claim 3 and claims 5 or 6, wherein the access control routine is further operable to store the for each NFT ticket identifier (IDN) the respective access permission level attributed.

8. The system according to any of the previous claims, wherein an event-promoter smart-contract (21) is configured to create an event, based on at least: an event name, an URL address to where images for NFT ticket generation are stored and an event-ticket smart-contract identifier; optionally,
the event-promoter smart-contract (21) is further configured to delete events associated to a promoter authority identifier.

9. The system according to claim 8, wherein a promotor authority (20) further comprises storage means (22) configure to implement a data structure array arranged to store, for each event associated to the respective promoter authority identifier: an event name, an URL address to where images for NFT ticket generation are stored, an event-ticket smart-contract identifier and an event smart-contract identifier.

10. The system according any of the previous claims, wherein an event smart-contract (23) is further configured to execute an event-period routine operable to create at least two event-time periods within an event-time duration; and wherein,
the event-period routine is further operable to associate each event-time period with a respective agreements-event-period smart-contract identifier.

11. The system according to claim 10, wherein an agreements-event-period smart-contract (24) is configured to, upon reception of a lending request issued by an owner entity for an event-time period, said lending request comprising at least a NFT ticket identifier (IDN) and a borrower entity identifier, execute a control policy routine operable to:
- access the event-ticket smart-contract identifier associated to the event-time period object of the lending request, and retrieve information related to the NFT ticket identifier (IDN) and the owner entity identifier associated to said event-ticket smart-contract identifier;
- validate the lending request if the owner entity that issued the landing request is that same owner entity identified by the owner entity identifier, and if the NFT ticket identifier (IDN) contained in the lending request exists;
- instruct the agreements-event-period smart-contract (24) to execute a lending agreement control routine to generate a lending agreement (25).

12. The system according to claim 11, wherein an agreements-event-period smart-contract (24) is further configured to execute a lending agreement manager routine operable to store lending agreements (25) generated by agreements-event-period smart-contracts (24) in in the blockchain; the routine being further operable to associated to each lending agreement (25), the respective lending agreement identification code, the NFT ticket identifier (IDN) associated to the event-ticket smart-contract identifier and the borrower entity identifier.

13. The system according to claim 12, wherein the control policy routine is further operable to validate the lending request, if the NFT ticket identifier (IDN) contained in the lending request, is not associated with a lending agreement (25) stored in the blockchain (1).

14. The system according to any of the previous claims, wherein the identifier assigned to:
a ticketing authority (10), a promotor authority (20), an owner entity, a borrower entity and to
an event-ticket smart-contract (11), an event-promoter smart-contract (21), an event smart-contract (23), and to an agreements-event-period smart-contract (24),
is a unique blockchain identification address; optionally, said address is a hexadecimal code.

15. The system according to any of the previous claims, wherein the blockchain infrastructure (1) is Ethereum.
